# EUROPEAN PATENT SPECIFICATION

(11) **EP 2 941 162 B1**
(45) Date of publication and mention of the grant of the patent: **13.11.2019**
(21) Application number: 13824637.6
(22) Date of filing: 20.12.2013
(51) Int. Cl.: A47K 3/40, E04F 15/02, E03F 5/04

(54) **SHAPED FLOOR FORMER**
BODENFORMUNGSMATERIAL
DISPOSITIF DE FORMATION DE PLANCHER À FORME

(30) Priority: 21.12.2012 GB 201223213
(43) Date of publication of application: 11.11.2015
(73) Proprietor: Riverbed Limited, Bath, Somerset BA3 4NT (GB)
(72) Inventor: HERRING, Sigi, Bath Somerset BA3 4NT (GB)
(74) Representative: Whitfield, Gillian Janette
(86) International application number: PCT/GB2013/053384
(87) International publication number: WO 2014/096849

(56) References cited:
- EP-A2- 2 206 456
- EP-A2- 2 314 190
- GB-A- 2 401 341
- US-A1- 2010 218 310
- US-A1- 2012 036 632
- US-A1- 2012 272 449

## Description

The present invention relates to a shaped floor former, in particular to a shaped floor former having at least one sloping surface to be placed below non-flexible floor material(s). In particular the present invention relates to a shaped floor former having at least one sloping surface for a wet room or shower.

Shaped floor formers having sloping surfaces are installed within an otherwise level floor of a room in order to permit waste water to be directed into a waste assembly. Shaped floor formers are conventionally used in wet rooms or showers. There are different methods of installation of shaped floor formers depending on the type of floor the floor former is to be installed into. For example, for a solid or typically concrete floor the shaped floor former may be placed on the floor and the level of the floor around the former is then raised to the same level as the top perimeter edge of the shaped floor former Alternatively, the solid or typically concrete floor is chased out to form a recess dimensioned to receive the shaped floor former. The shaped floor former is then placed in the recess. In both cases, after installation of the shaped floor former the top perimeter edge of the floor former is level with (e.g. sits flush with) the adjacent finished floor surface. US 2010/0218310 discloses such a former intended for use on a solid or typically concrete floor. The former includes a waterproof membrane that is adhered across the full surface of the former during installation and extends beyond the edges of the former for location under adjacent tiling etc once the former has been placed in the recess. In another example, for installation into a timber floor the shaped floor former is initially placed in the desired location on the timber floor and used as a template. The floor boards in this area are then removed. The shaped floor former is then placed into the space of the removed floor boards and is supported on the joists underneath. The perimeter thickness of the shaped floor former is typically the same as the thickness of a floorboard such that once in position the top of the perimeter edge will be level with the surrounding timber floor.

The thickness of the floor former is greatest at the perimeter edge where the top surface should be level with the finished floor of the room. The sloping surfaces descend from the perimeter edge to the lowest point adjacent to the outlet at which the waste assembly is fixed. The base of the former should be flat where possible to avoid obstruction when resting on the joists that would inhibit its flat installation. As a result, the former has its thinnest cross-section immediately around the outlet at which the waste assembly is to be fitted. On large floor formers, it has been found that it is not possible to maintain sufficient thickness of the former to provide the necessary structural integrity. As a result, conventional floor formers deviate from having a flat base. The base of conventional floor formers is instead lowered at the portion near the outlet so as to maintain sufficient thickness to establish the necessary structural integrity in this region. The presence of the lowered sections in the base can however cause problems on installation of the floor former into timber flooring. The lowered sections of the base can span the floor joists and as a result can prevent the necessary flat installation of the former onto the joists. As a result, the floor former may have to be placed elsewhere in a less preferred location in order to avoid the floor joists. Alternatively, the installer will have to perform on site modification of the floor joist structure/configuration in order to place the floor former in the desired location. This modification will be time consuming and costly.

Where the sloping profiles of the former converge there is conventionally an opening and flange moulded into the former to accept a conventional waste water assembly. The flange is typically cylindrical in shape. Typically there is a slotted cover over the top of the waste through which the waste water passes into the waste assembly. Surrounding the slotted cover there is a flange to retain the cover which is typically in a fixed position directly over the waste and sometimes adjustable up and down through rotation of the flange to accommodate different thicknesses of tile. This flange as well as providing a location for the cover also serves as a stop for the tiles to abut. One consideration for this conventional design is that the water which is converging towards the waste over the sloping surfaces then meets the flange which can be set slightly high in order for the flange to be square with the tile cut. This can create a weir for the water to traverse and then, having lost momentum, have to travel across a flat surface of the waste cover before eventually entering one of the slots in the cover. The consequence of such a design is that the waste cover configuration can determine the flow rate of the waste water and therefore restrict the choice of waste cover.

Embodiments of the present invention are suited to use on or in a concrete floor, but are specifically designed to seek to address one or more of the disadvantages of installing conventional shaped floor formers in timber floors.

Accordingly, in a first aspect of the present invention provides a shaped floor former for installation within solid or timber flooring to provide a waterproof sloping surface for a showering area, the shaped floor former comprising:
a level outer edge comprising a trimmable flat surface around the periphery of the former;
an opening arranged to receive a waste water assembly; and
at least one sloping surfaces for receiving a floor material, in which the at one or more sloping surfaces extend from the level outer edge and slope towards the opening such that, in use, the one or more sloping surfaces define a flow path to direct water towards the opening;
in which the former further comprises an integral waterproof membrane secured to all of the one or more sloping surfaces, and wherein the waterproof membrane overlaps the level outer edge and extends beyond the level outer edge, but is not adhered to the level outer edge.

The integral waterproof membrane avoids the installer having to carry out the additional step of applying a waterproof membrane after the floor former has been installed. Conventional application of a waterproof membrane to a surface which is not flat and which has intersecting sloping surfaces can be particularly difficult to accomplish with a flat waterproof membrane.

The opening may provide a recess comprising an upper portion located adjacent to the one or more sloping surfaces and a lower portion located to engage a water waste assembly, in which the upper portion of the recess has a first profile and the lower portion of the recess has a second profile of reduced cross-section compared to the first profile.

Preferably, the upper portion of the recess has a substantially square or rectangular cross-section and optionally the lower portion of the recess is substantially cylindrical. It is to be appreciated that the waste water assembly could be any other suitable shape including, but not limited to, rectangular or square.
In one embodiment, the former further comprises a cover frame shaped and dimensioned to be received within the upper portion of the recess, and in which the cover frame provides an aperture aligned with the lower portion of the recess; and
a cover arranged to be received within the aperture of the cover frame;
in which the cover is shaped and dimensioned such that when received within the frame a passage is provided between the frame and the cover to provide a flow path to direct water towards the waste water assembly. Preferably, the former has a substantially flat base.

The opening is preferably positioned offset from the centre of the floor former, for example the opening is preferably off-centre. By locating the opening offset from the centre of the floor former, during installation the tray may be able to be rotated so as to reposition the opening. This would enable the position of the opening to be moved so as to avoid a below floor obstruction which may be encountered during installation. The opening may provide a recess comprising an upper portion located adjacent to the at least one sloping surface and a lower portion located to receive a water waste assembly. The upper portion of the recess preferably has a substantially square or rectangular cross-section. The upper portion of the recess preferably has a substantially square cross-section. The lower portion of the recess may be substantially cylindrical. The lower portion of the recess is preferably dimensioned to receive a waste water assembly. The lower portion of the recess is of sufficient depth to create a space above the waste water assembly but below the level of the finished tile. The opening may provide a stepped profile having a first flange having a substantially square or rectangular cross-section to provide the upper portion of the recess and a second flange connecting the upper portion of the recess to the lower portion of the recess.

The upper portion of the recess may be molded into the top face of the former. A frame may be dimensioned and shaped to be received within the upper portion of the recess. The frame may be shaped so as to match the shape of the upper portion of the recess. The frame could have a base portion which may be sized and shaped to fit the upper portion of the recess and extend under the floor covering. The base portion of the frame may be dimensioned to be smaller than the upper portion of the recess. The upper portion of the recess may therefore allow the frame, for example the base portion of the frame, to move laterally and/or limited rotation while being retained within the upper portion of the recess. The frame may be composed of a sturdy, non-corrosive material. For example, the frame may be composed of stainless steel. For example, the frame may have a substantially square or rectangular cross-section.

The frame may provide abutment surfaces, for example the frame may comprise upright portions upstanding from a base portion, forming the square or rectangular cross-section of the frame. The upright portions may extend substantially perpendicular to the base portion of the frame. The abutment surfaces of the frame may provide surfaces to which tiles which are to be laid onto the former can be positioned against or abut. The thickness of the tile to be placed on the former may determine the height required of the abutment surfaces of the frame. A range of frames may therefore be provided having base portions having the same dimensions and having abutment surfaces of varying heights, For example, during installation the appropriate frame having the appropriate height of the abutment surfaces is selected so as to be substantially equivalent to the thickness of the tile to be placed on the former. For example, the frame may be selected such that in use the upper surface of the abutment surface of the frame is substantially level with (e.g. sits flush with) the water contact surface of the tiles placed on the former. The frame may provide an aperture such that in use, when positioned in the upper portion of the recess, the aperture is aligned with the lower portion of the recess of the former.

The frame may receive a cover. The frame and the cover may be present or provided as a matched pair or unit, for example the frame and the cover may be of the same shape. During installation, the installer selects the appropriate pair or unit of frame and cover for use with the former. The cover may be shaped and dimensioned to be received within the aperture of the frame. The frame may provide a shaped aperture for receiving a correspondingly shaped cover. For example, the frame may provide a square or rectangular shaped aperture for receiving a square or rectangular shaped cover. The frame may provide a circular aperture for receiving a circular shaped cover. The cover may be arranged to engage the frame. The cover may be arranged to removably engage the frame. The cover may be arranged such that when received within the aperture provided by the frame an opening is provided between the frame and the cover to provide a flow path to direct water towards the waste water assembly. For example, the opening may be provided between the cover and the frame so as to provide a flow path to direct water towards the lower portion of the recess. The upper portion of the recess may position the frame and cover directly over the waste assembly whilst allowing some lateral and limited rotational movement of the frame and waste cover to cater for slight inaccuracies when cutting tiles around it. The frame and cover may be arranged so as to allow water to pass into the waste assembly without any obstruction. At the location of the removable fixings, the opening (for example the gap or slot) around the periphery of the cover will be closed.

The cover may be composed of any suitable material. For example, the cover may be composed of sturdy, non-corrosive material. The cover may be formed of the same material as the frame. The cover may be composed of stainless steel. The cover may be of any suitable shape corresponding to the aperture provided by the frame. The cover may have a smaller cross-section than the aperture provided by the frame. For example, the aperture provided by the frame may have a substantially square or rectangular cross-section. The cover may have a substantially square or rectangular cross-section with reduced cross-section compared to the aperture provided by the frame. The cover may be solid having no additional slots or openings within the cover. The cover may provide a recess into which flooring material (e.g. tile) could be fixed. The cover may be double sided. A first side of the cover may be formed from the material of manufacture or some other decorative coating. The opposing side may provide a recess into which tile could be fixed therefore substantially disguising the position of the waste outlet and further allowing the same flooring materials to be used across it as are used in the rest of the room.

The frame and cover may be provided as matching pairs or units. During installation the appropriate pair or unit of frame and cover may be selected for use with the former. The frame and cover pair or unit are preferably interchangeable for installation with the former. For example, the frame and cover pairs or units may be interchangeable with frame and cover pairs or units having different cross-sectional heights of abutment surfaces of the frame while having the same cross-sectional shape and dimensions of the base portion of the frame. The frame and cover pairs or units may be interchangeable with frame and cover pairs or units having different shapes for fitting within the common recess of the former. The frame and cover pairs or units may be interchangeable so that the frame and cover pairs or units have differing sizes for fitting within the common recess of the former, for example the base portion of a frame/cover pair may be thin but wide instead of being square. The frame and cover pairs or units may be interchangeable so that the installer can select the appropriate finish, for example vinyl, wood etc.

The opening provided by the frame and the cover may be a gap or slot. The opening (for example a gap or slot) may be provided all the way around or substantially all the way around the perimeter of the cover. This opening provides the passage for waste water collected directly from the floor coverings on the at least one sloping surfaces of the shaped floor former to pass vertically down into the lower portion of the recess and the waste assembly below. The upper surface of the opening is preferably flush with the floor covering. The position of the opening through which waste water passes into the passage vertically down into the waste assembly below, relative to the sloping surfaces, allows fast passage of water into the waste assembly with little or no loss of the momentum gained by the water over the sloping surfaces.

The former may be composed of weight bearing material having substantially the same strength and rigidity as the flooring into which the former is to be installed. For example, the weight bearing material may have substantially the same strength and rigidity as timber flooring.

The former may be of any suitable shape, however the former is preferably square or rectangular in shape.

The outer edge may be provided with a border which may comprise a non-sloping peripheral border. The outer edge, or the outer border edge, width may vary. The width of the outer edge is determined by the gradient of the adjacent sloping surface(s). Each of the outer edges may have the same width as each other. Alternatively, the width of each of the outer edges may vary independently of each other. Opposing pairs of outer edges may have the same width.

The level outer edge of the former comprises a trimmable flat surface around the periphery of the former. The trimmable flat surface may be cut or trimmed when the former is installed in the desired location. The trimmable edge is preferably flat such that when material is removed the new outer edge is still at the same height as the rest of the outer edge. The extent of the flat section is determined by the gradient of the sloping surfaces that rises to it so that the tile, if it is laid on the plane of the sloping surface and then extends to the perimeter of the former over the flat section, the extent to which it clears contact with the substrate former is so insignificant that the underlying adhesive bed more than compensates. Tiles can therefore be sized to the outer edge of the former or just to the extent of the sloping surface or to any position in between without concern of future fracture or delamination.

The former includes one or more sloping surfaces each defining a flow path. For example the former may include at least two sloping surfaces, preferably four sloping surfaces defining a flow path. The sloping surfaces may have any suitable shape and meet at a location near to or at the opening. For example the sloping surfaces may be truncated generally triangular faces which meet near to the opening, or for example at a frame adjacent to the opening.

The former includes an integral waterproof membrane. The integral waterproof membrane is secured to the formed at the factory and is therefore not supplied separately. Installation of the former therefore does not require a waterproof membrane to be applied on site. The integral waterproof membrane may be secured to at least a portion of the former. For example, the integral waterproof membrane may be secured to at least one sloping surface of the former. Preferably, the integral waterproof membrane is secured to all of the sloping surfaces of the former. Preferably, the integral waterproof membrane is not secured to the outer edge. The integral waterproof membrane preferably extends to the opening. The integral waterproof membrane may extend to the upper portion of the recess or may extend to the lower portion of the recess.

The integral waterproof membrane overlaps the outer edge of the floor former and extends beyond the outer edge, but is not adhered to the outer edge. Thus, in use the integral waterproof membrane can span the transition joint between the former and the adjacent surface. The integral water proof membrane may be formed of a single component. Alternatively, the integral waterproof membrane may include a first component secured to at least one sloping surface of the former and a second component, for example a perimeter flexible edge strip, arranged to overlap the outer edge of the floor former and extend beyond the outer edge such that, in use the second component of the integral waterproof membrane can span the transition joint between the former and the adjacent surface. The integral waterproof membrane may overlap and extend beyond the outer edge of the former and span the transition joint surrounding the former so that the waterproof membrane may extend in either a horizontal or vertical direction. For example, the integral waterproof membrane may overlap the outer edge of the former and span the transition joint so as to extend across the adjacent flooring or up an adjacent wall surface. Careful folding of the integral waterproof membrane can advantageously form an internal corner to span the transition from the former up a wall at a corner. Preferably, the integral waterproof membrane is not secured to the outer edge of the former so that the trimable flat surface can be trimmed if necessary and the former secured, for example screwed, to the floor in the desired location. The integral membrane can then be folded back to overlap the outer edge of the former, and to cover the fixing holes for the attachment means, for example screws, and the transition joint (eg. joint gap).

The integral waterproof membrane may enable immediate fixing of tiles/covering the former. The integral waterproof membrane may provide a textured upper surface for receiving tiles/tile adhesive. The textured surface enables adhesives of the tiles/covering to grab and adhere to the membrane.

The thickness of the former is preferably substantially the same thickness as the surrounding floor surface, for example timber floorboards. The underside of the former is preferably substantially flat. For example, the underside of the former is preferably substantially flat. Protrusion of the lower portion of the recess from the substantially flat underside of the former is preferably kept to a minimum. The lower portion of the recess preferably does not extend from the underside of the former beyond the essential and inevitable obstruction that the waste assembly itself creates at this location. The presence of the substantially flat underside of the former means that the former can be placed in a desired location without interfering with floor joist structure of a timber floor. Furthermore, the presence of the substantially flat underside of the former means that the installer will not be required to carry out any additional on site modifications of the floor joist structure or configuration.

The present invention therefore, with the combination of features, positively encourages the structural and waterproof integrity of the final installation of the shaped floor former whilst also providing overall aesthetic benefits.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 is an isometric view of one component of the shower floor former having a substantially square/rectangular solid body;
Figure 2 is an isometric view of the shower floor former, according to one embodiment of the invention, showing the shower floor former as supplied on one half of the view, and with tiles after installation on the other half of the view;
Figure 3 is an isometric view of the underside of the shower floor former of the embodiment of Figure 2;
Figure 4 is an isometric view of the shower floor former of the embodiment of Figure 2 focussing on the area around the shower waste assembly;
Figure 5 is a plan view from above of the shower floor former of the embodiment of Figure 2, showing the shower floor former as supplied on one half, and with tiles after installation on the other half.
Figure 6 is a cross sectional view of the shower floor former of the embodiment of Figure 2, focussing on the area around the shower waste assembly or gully device, showing the shower floor former as supplied on one half, and with tiles after installation on the other half.

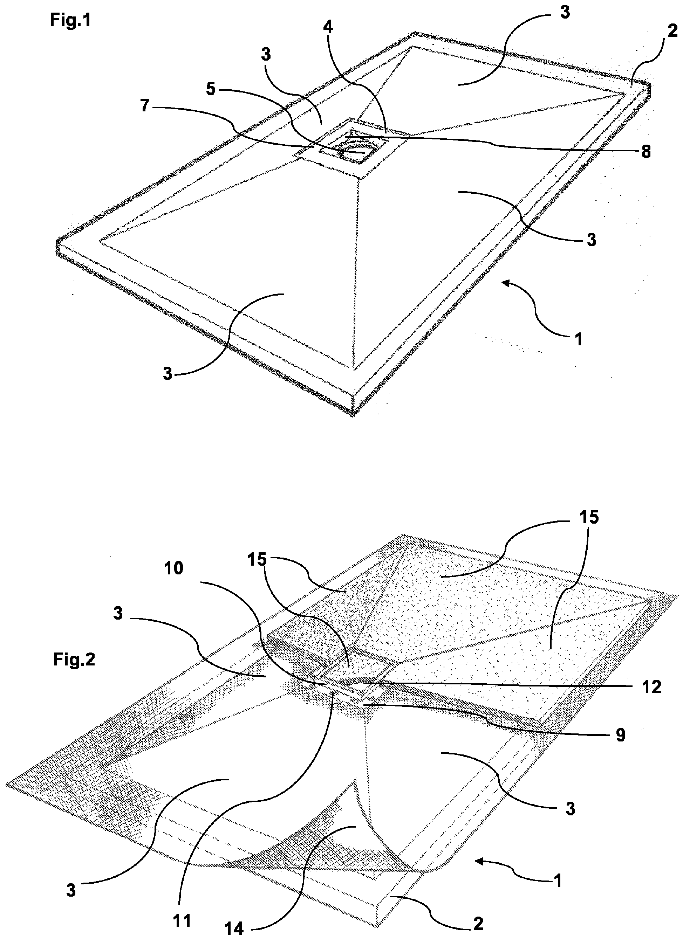

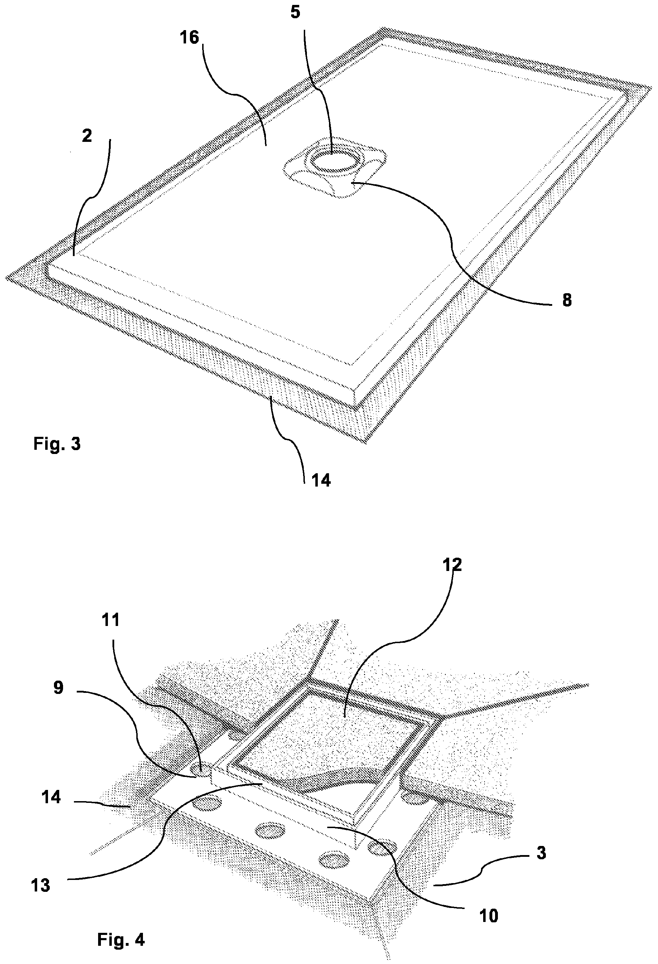

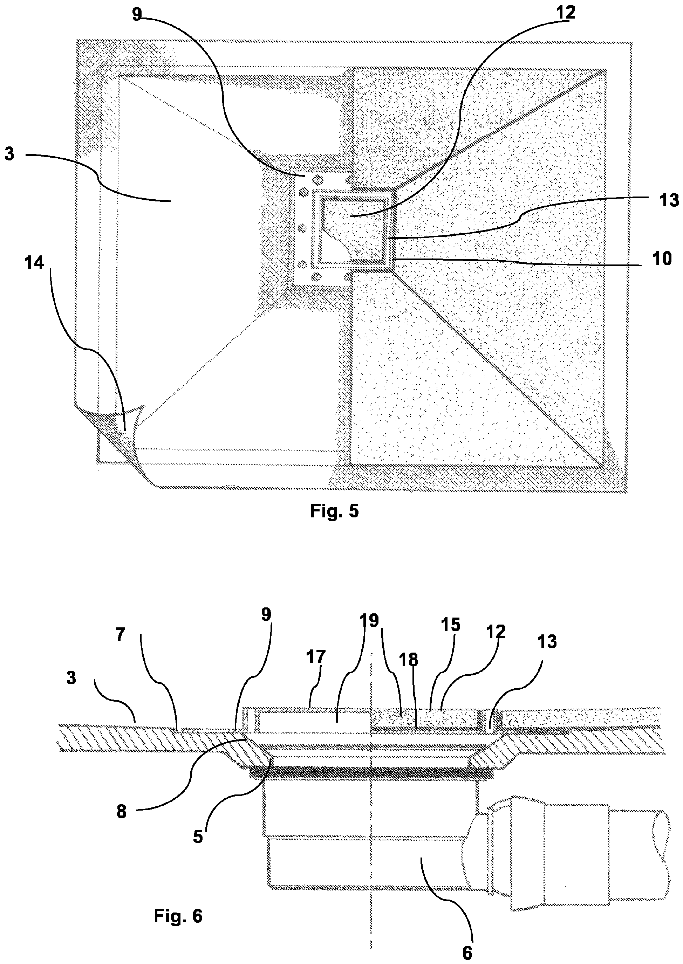

Referring to Figures 1 to 6 of the accompanying drawings, one embodiment of the shower floor former according to the present invention is illustrated. The former 1 comprises a formed substantially rectangular solid body. The body is composed of a weight bearing material having the same strength and rigidity as the timber flooring into which the former is to be installed. The former 1 has a level outer edge 2 surrounding four sloping surfaces 3. The former 1 has a substantially flat underside 16. The width of the level outer edge 2 is determined by the gradient of the adjacent sloping surfaces 3 and can therefore vary on each of the outer edges 2. The four sloping surfaces 3 are truncated generally triangular faces which meet at a common essentially square upper portion 4 of a recess extending into a cylindrical lower portion 5 of a recess. The lower portion 5 of the recess is shaped for connection to a conventional shower waste assembly 6.

The former 1 has a waterproof sheet membrane 14 permanently fixed to the four sloping surfaces 3 of the former 1. The sheet membrane 14 extends to the upper portion 4 of the recess. The sheet membrane 14 may extend to the lower portion 5 region of the recess. The sheet membrane 14 extends over and overlaps the outer edges 2 of the former 1. The amount of sheet membrane 14 overlapping the outer edges 2 of the former 1 is the amount sufficient to enable the sheet membrane 14 to be fixed, as part of the installation process, over fixings and onto surrounding floor surfaces.

The former 1 has an opening providing an upper portion 4 of a recess having a substantially square cross-section. The square upper portion of the recess 4 is provided with a stepped profile to provide a first flange or shoulder 7. The opening further provides a second flange 8 which extends into the cylindrical lower recess 5.

The first flange 7 presents a shoulder which is substantially square in shape into which a frame 9 is placed. The square shoulder 7 has a slightly larger cross-section than frame 9 which is also essentially square in cross-section. The shoulder 7 therefore allows movement up and down and side to side and very limited twisting of the frame 9 within the upper portion 4 of the recess. The upper portion 4 of the recess helps to keep the frame essentially square to the former 1.

The second flange 8 has a shoulder of some depth and the shoulder 8 goes from having a square cross-section to a circular cross-section at the lower portion 5 of the recess. The lower portion 5 of the recess is shaped and dimensioned to receive the waste water assembly. The second flange 8 of the former 1 is smaller but large enough to allow water to flow into it from the centre of the frame 9 without obstruction even when the frame 9 is at its extremities of its movement within the flange 7,

The frame 9 is made of sturdy non-corrosive material, for example stainless steel, and has a flat square perimeter base portion with abutment surfaces 10, for example the frame 9 comprises upright portions, forming the substantially square cross-section of the frame 9. The flat square perimeter flange of the frame 9 is sized to fit within the upper portion 4 of the recess and provides perforations 11 which allow, in use, tile adhesive to bond it securely into position on the former 1 as part of the installation process. The abutment surfaces 10 form a square at the centre and acts as a stop for tiles to abut. Frames 9 having abutment surfaces 10 of various pre-determined heights can be provided.

Removably fixed within the frame 9 is a cover 12. The cover 12 is arranged to be complimentary in shape to the aperture provided by the frame 9. The cover 12 is substantially square in cross-section and of a size to allow a gap 13 to extend between the cover 12 and the frame 9. The cover 12 is formed from the same sturdy non-corrosive material, for example stainless steel as the frame 9. The cover 12 is dimensioned and arranged such that the cover 12 removably engages the frame 9 so that the upper surfaces of the cover 12 and the frame 9 are level. The cover 12 matches the height of the upstanding abutment surfaces 10 of the frame 9. The cover 12 has a top surface and a bottom surface. The cover 12 can be placed in a first orientation in the frame 9 in which the top surface of the cover 12 is exposed. The top surface of the cover 12 may be formed from the material of manufacture or some other decorative coating. Alternatively, the cover 12 may be placed in a second orientation in the frame 9 in which bottom surface is exposed. The bottom surface of the cover 12 may provide a recess into which tile could be fixed therefore substantially disguising the position of the waste outlet and further allowing the same flooring materials to be used across it as are used in the rest of the room.

In use, the former 1 is placed as a template in the desired location on the timber flooring. The installer removes the timber flooring in the desired location and inserts the former 1. As the former 1 has a substantially planar underside 16, the underside 16 of the former 1 does not interfere with the joist construction of the floor. As a result the former 1 can be placed in the desired location without having to carry out any additional modifications of joist construction of the floor. The lower portion 5 of the recess aligns with and receives a waste water assembly. The former 1 is secured in place with fixings to the surrounding timber floor. The waterproof membrane 14 overlaps and extends beyond the outer edges 2 of the former 1 and the installer covers the adjacent surrounding floor and fixations with the waterproof membrane 14. The frame 9 having a square cross-section is inserted within the upper portion 4 of the recess. The upper portion 4 of the recess also has a substantially square cross-section and is slightly larger in cross-sectional dimensions than frame 9. The upper portion 4 of recess therefore allows some lateral and limited rotational movement of the frame 9 to cater for slight inaccuracies when cutting tiles around it. Tile adhesive is applied to perforations 11 to secure the frame 9 to flange 7. Tiles are secured to the waterproof membrane 14 of the former 1. The sloping surfaces 3 of the former 1 determine the orientation of the tiles, and thus define the flow path to direct water towards the opening in use (i.e. the flow path is along the upper surface of the floor covering and substantially parallel to the sloping surface). A tile is cut to shape to be fitted within the recess of cover 12. The cover 12 is removably fixed to the frame 9 so as to provide a gap 13 extending around the periphery of cover 12. The cover 12 is placed in the frame 9 so that the tiled portion (bottom surface) of the cover 12 is visible in use. In use, the upper surface of the tiled portion of the cover 12 is level with the upstanding abutment surfaces 10 of the frame. The position of the water outlet can be disguised by the cover 12 and the cover 12 enables the same flooring materials (e.g. tiles) to be used across a water outlet as are used in the rest of the room. The gap 13 provided between the cover 12 and the frame 9 provides a passage for waste water collected directly from the tiles on the sloping surfaces 3 to pass vertically down into the waste assembly. This gap 13 therefore allows fast passage of water into the water assembly with little or no loss of the momentum gained by the water over the sloping surfaces 3.

Although the invention has been described above with one or more preferred embodiments, it will be appreciated that various changes and/or modifications may be made without departing from the scope of the invention as defined in the appended claims.

## Claims

1. A shaped floor former (1) for installation within solid or timber flooring to provide a waterproof sloping surface for a showering area, the shaped floor former (1) comprising:
a level outer edge (2) comprising a trimmable flat surface around the periphery of the former (1);
an opening arranged to receive a waste water assembly; and
one or more sloping surfaces (3) for receiving a floor material, in which the one or more sloping surfaces (3) extend from the level outer edge (2) and slope towards the opening such that, in use, the one or more sloping surfaces (3) define a flow path to direct water towards the opening;
in which the former (1) further comprises an integral waterproof membrane (14) secured to all of the one or more sloping surfaces, and wherein the waterproof membrane (14) overlaps the level outer edge (2) and extends beyond the level outer edge (2), but is not adhered to the level outer edge (2) .

2. A shaped floor former (1) as claimed in any preceding claim, in which the integral waterproof membrane (14) extends to the opening.

3. A shaped floor former (1) as claimed in any preceding claim, in which the integral waterproof membrane (14) provides a textured upper surface for receiving tiles/tile adhesive.

4. A shaped floor former (1) as claimed in any preceding claim, in which the opening provides a recess comprising an upper portion (4) located adjacent to the one or more sloping surfaces (3) and a lower portion (5) located to receive a water waste assembly, in which the upper portion (4) of the recess has a first profile and the lower portion (5) of the recess has a second profile of reduced cross-section.

5. A shaped floor former (1) as claimed in claim 4, in which the upper portion (4) of the recess has a substantially square or rectangular cross-section and optionally the lower portion (5) of the recess is cylindrical.

6. A shaped floor former (1) as claimed in claim 4 or claim 5, in which the former (1) further comprises a cover frame (9) shaped and dimensioned to be received within the upper portion (4) of the recess, and in which the cover frame (9) provides an opening aligned with the lower portion (5) of the recess; and
a cover (12) arranged to be received within the cover frame (9);
in which the cover (12) is shaped and dimensioned such that when received within the cover frame (9) a passage is provided between the frame (9) and the cover (12) to provide a flow path to direct water towards the waste water assembly.

7. A shaped floor former (1) as claimed in any preceding claim, in which the former (1) has a substantially flat base.

## Patentansprüche

1. Ein Formbodengebilde (1) zum Einbau in Massiv- oder Holzböden, um eine wasserdichte, abfallende Oberfläche für einen Duschbereich bereitzustellen, wobei das Formbodengebilde (1) Folgendes umfasst:
eine ebene Außenkante (2), die eine trimmbare ebene Fläche um den Umfang des Gebildes (1) herum aufweist;
eine Öffnung, die zur Aufnahme einer Abwasseranordnung angeordnet ist; und
eine oder mehrere abfallende Oberflächen (3) zur Aufnahme eines Bodenmaterials, wobei sich die eine oder die mehreren abfallen Oberflächen (3) von der ebenen Außenkante (2) erstrecken und zur Öffnung hin abfallen, so dass im Gebrauch die eine oder die mehreren abfallenden Oberflächen (3) einen Strömungsweg definieren, um Wasser zur Öffnung zu leiten;
wobei das Gebilde (1) ferner eine integrierte wasserdichte Membran (14) aufweist, die an allen der einen oder mehreren abfallenden Oberflächen befestigt ist, und wobei die wasserdichte Membran (14) die ebenen Außenkante (2) überlappt und sich über die ebene Außenkante (2) hinaus erstreckt, aber nicht an der ebenen Außenkante (2) anhaftet.

2. Formbodengebilde (1) gemäß einem der vorhergehenden Ansprüche, wobei sich die integrierte wasserdichte Membran (14) bis zur Öffnung erstreckt.

3. Formbodengebilde (1) gemäß einem der vorhergehenden Ansprüche, wobei die integrierte wasserdichte Membran (14) eine strukturierte Oberseite zur Aufnahme von Fliesen/Fliesenkleber bereitstellt.

4. Formbodengebilde (1) gemäß einem der vorhergehenden Ansprüche, wobei die Öffnung eine Aussparung vorsieht, die einen oberen Abschnitt (4), der angrenzend an die eine oder die mehreren abfallenden Oberflächen (3) angeordnet ist, und einen unteren Abschnitt (5) aufweist, der zur Aufnahme einer Abwasseranordnung angeordnet ist, wobei der obere Abschnitt (4) der Aussparung ein erstes Profil aufweist und der untere Abschnitt (5) der Aussparung ein zweites Profil mit reduziertem Querschnitt aufweist.

5. Formbodengebilde (1) gemäß Anspruch 4, wobei der obere Abschnitt (4) der Aussparung einen im Wesentlichen quadratischen oder rechteckigen Querschnitt aufweist und optional der untere Abschnitt (5) der Aussparung zylindrisch ist.

6. Formbodengebilde (1) gemäß Anspruch 4 oder Anspruch 5, wobei das Gebilde (1) ferner einen Abdeckrahmen (9) umfasst, der so geformt und dimensioniert ist, dass er innerhalb des oberen Abschnitts (4) der Aussparung aufgenommen werden kann, und wobei der Abdeckrahmen (9) eine Öffnung bereitstellt, die mit dem unteren Abschnitt (5) der Aussparung ausgerichtet ist; und
eine Abdeckung (12), die angeordnet ist, um innerhalb des Abdeckrahmens (9) aufgenommen zu werden;
wobei die Abdeckung (12) so geformt und dimensioniert ist, dass bei Aufnahme innerhalb des Abdeckrahmens (9) ein Durchgang zwischen dem Rahmen (9) und der Abdeckung (12) vorgesehen ist, um einen Strömungsweg zum Leiten von Wasser zur Abwasseranordnung bereitzustellen.

7. Formbodengebilde (1) gemäß einem der vorhergehenden Ansprüche, wobei das Gebilde (1) eine im Wesentlichen flache Basis aufweist.

## Revendications

1. Dispositif de formation de plancher à forme (1) pour une installation dans un revêtement de plancher solide ou en bois d'œuvre afin de réaliser une surface inclinée étanche à l'eau pour un receveur, le dispositif de formation de plancher à forme (1) comprenant :
un bord extérieur de niveau (2) comprenant une surface plate pouvant être ajustée autour de la périphérie du dispositif de formation (1) ;
une ouverture agencée pour recevoir un ensemble pour eaux usées ; et
une ou plusieurs surfaces inclinées (3) pour recevoir un matériau de plancher, dans lesquelles la ou les surfaces inclinées (3) s'étendent à partir du bord extérieur de niveau (2) et sont inclinées vers l'ouverture de sorte que, en usage, la ou les surfaces inclinées (3) définissent un trajet d'écoulement pour diriger l'eau vers l'ouverture ;
dans lequel le dispositif de formation (1) comprend en outre une membrane étanche à l'eau intégrée (14) fixée à la totalité de la ou des surfaces inclinées, et dans lequel la membrane étanche à l'eau (14) recouvre le bord extérieur de niveau (2) et s'étend au-delà du bord extérieur de niveau (2), mais n'est pas collé au bord extérieur de niveau (2).

2. Dispositif de formation de plancher à forme (1) selon l'une quelconque des revendications précédentes, dans lequel la membrane étanche à l'eau intégrée (14) s'étend jusqu'à l'ouverture.

3. Dispositif de formation de plancher à forme (1) selon l'une quelconque des revendications précédentes, dans lequel la membrane étanche à l'eau intégrée (14) fournit une surface supérieure texturée pour recevoir des carreaux/un adhésif pour carreaux.

4. Dispositif de formation de plancher à forme (1) selon l'une quelconque des revendications précédentes, dans lequel l'ouverture fournit un évidement comprenant une partie supérieure (4) située adjacente à la ou aux surfaces inclinées (3) et une partie inférieure (5) située pour recevoir un ensemble pour eaux usées, dans lequel la partie supérieure (4) de l'évidement présente un premier profil et la partie inférieure (5) de l'évidement présente un second profil de section transversale réduite.

5. Dispositif de formation de plancher à forme (1) selon la revendication 4, dans lequel la partie supérieure (4) de l'évidement a une section transversale sensiblement carrée ou rectangulaire et éventuellement la partie inférieure (5) de l'évidement est cylindrique.

6. Dispositif de formation de plancher à forme (1) selon la revendication 4 ou la revendication 5, dans lequel le dispositif de formation (1) comprend en outre un cadre de couverture (9) conformé et dimensionné pour être reçu dans la partie supérieure (4) de l'évidement, et dans lequel le cadre de couverture (9) fournit une ouverture alignée avec la partie inférieure (5) de l'évidement ; et
un couvercle (12) conçu pour être reçu dans le cadre de couvercle (9) ;
dans lequel le couvercle (12) est conformé et dimensionné de telle sorte que, lorsqu'il est reçu dans le cadre de couvercle (9), un passage est ménagé entre le cadre (9) et le couvercle (12) afin de fournir un trajet d'écoulement pour diriger l'eau vers l'ensemble pour eaux usées.

7. Dispositif de formation de plancher à forme (1) selon l'une quelconque des revendications précédentes, dans lequel le dispositif de formation (1) a une base sensiblement plate.
